# FASCICULE DE BREVET EUROPEEN

(11) **EP 1 043 186 B1**
(45) Date de publication et mention de la délivrance du brevet: **04.11.2009**
(21) Numéro de dépôt: 00400964.3
(22) Date de dépôt: 07.04.2000
(51) Int. Cl.: B60M 1/34

(54) **Assemblage d'alimentation par le sol pour véhicule électrique**
Bodenstromversorgungseinrichtung für ein elektrisches Fahrzeug
Ground power supply assembly for electric vehicle

(30) Priorité: 07.04.1999 FR 9904349
(43) Date de publication de la demande: 11.10.2000
(73) Titulaire: INNORAIL, 95863 Cergy-Pontoise (FR)
(72) Inventeur: Perraud, Olivier, 78150 Le Chesnay (FR); Brunet, Stéphane, 75002 Paris (FR); Morin, Bruno, 75007 Paris (FR)
(74) Mandataire: Le Forestier, Eric

(56) Documents cités:
- EP-A- 0 761 493
- WO-A-91/01232
- FR-A- 2 762 810
- US-A- 4 139 071

## Description

La présente invention concerne les aménagements d'alimentation de véhicules électriques par le sol.

On a proposé dans le document FR 2 762 810 un tel aménagement dans lequel une série de segments de piste d'alimentation et une ligne sous tension parcourent toutes deux le trajet d'un véhicule électrique, et dans lequel un segment n'est mis en contact avec la ligne sous tension que lorsque le véhicule est détecté au-dessus de ce segment.

On propose dans ce document FR 2 762 810 de disposer les segments sur une assise de béton, de sorte que la ligne sous tension parcourt le trajet du véhicule parallèlement à cette assise de béton.

Un tel aménagement présente de nombreux inconvénients. Il est coûteux, de mise en place pratiquement irréversible, et ne fournit aucune protection ni aucun guidage de la ligne de tension parallèlement à la série de segments de piste.

Un but de la présente invention est de résoudre ces différents inconvénients en proposant un aménagement d'alimentation par le sol qui soit facile à mettre en place, peu coûteux et aisé à entretenir, en particulier qui permette un changement aisé des différents éléments qui le constituent.

Pour cela, l'invention propose un assemblage d'alimentation par le sol pour véhicule électrique, comprenant une série de segments de piste de contact, isolés entre eux et au moins partiellement découverts, une ligne électrique destinée à être alimentée en permanence, des moyens aptes à relier sélectivement les segments de piste à la ligne électrique, ainsi que des segments-supports présentant chacun la forme générale d'un profilé comportant, d'un seul tenant, une paroi horizontale supérieure recevant sur sa face supérieure un segment de piste, et une âme recevant la ligne d'alimentation, caractérisé en ce que l'âme forme isolant électrique autour de la ligne d'alimentation et découvre celle-ci au niveau des extrémités des segments-supports, et en ce que l'assemblage comporte au moins une coque adaptée à venir en appui par ses bords libres contre les côtés des âmes de deux segments-supports consécutifs, recouvrant de manière étanche les parties découvertes de la ligne d'alimentation au niveau des extrémités adjacentes des deux segments-supports.

Selon des dispositions avantageuses mais non limitatives :
- la ligne d'alimentation forme une série de segments associés chacun à un segment de support ;
- les segments d'alimentation consécutifs sont reliés par des éléments conducteurs souples ;
- les segments d'alimentation sont des conducteurs métalliques, dont le seul isolant autour de leur partie courante est formé à chaque fois par un segment de support ;
- les segments d'alimentation sont des barres métalliques.
- une paroi d'une coque est traversée par des liaisons électriques reliant la ligne d'alimentation ainsi qu'au moins un segment de piste à un commutateur apte à relier sélectivement ce segment de piste à la ligne d'alimentation ;
- la paroi de la coque est traversée par des liaisons électriques qui relient chacun des segments de piste consécutifs arrivant au boîtier à un commutateur apte à relier séparément chacun des deux segments de piste à la ligne d'alimentation ;
- la paroi horizontale supérieure des segments de supports présente en face supérieure une gorge parcourant la quasi totalité de la bordure du segment de manière à former sensiblement une boucle entourant l'ensemble de la surface de cette paroi supérieure ;
- la gorge en boucle est parcourue par une conduite électrique comprenant au moins deux conducteurs parallèles isolés entre eux.
- l'assemblage comprend un commutateur apte à relier sélectivement un segment de piste à la ligne d'alimentation et un carter apte à recevoir le commutateur, et en ce que le carter et le commutateur sont munis de moyens de connexion électrique complémentaires aptes à être mis en place par enfichage du commutateur dans le carter ;
- le carter et/ou le commutateur sont/est muni(s) de rails de guidage aptes à guider le commutateur lors d'un enfichage des moyens de connexion entre lui et le carter ;
- un segment de piste est de longueur inférieure à celle du segment-support associé à lui, et prolongé à au moins une des ses extrémités par un élément isolant ayant une face alignée avec une face découverte du segment de piste ;
- l'assemblage comporte une feuille formant enveloppe autour d'une jonction entre deux segments de supports successifs ;
- la feuille est une feuille métallique.
- la feuille forme en section transversale une enveloppe en U dont le fond reçoit une paroi inférieure des segments-supports ;
- la feuille métallique est couplée à un détecteur de courants de fuite.
- les segments-supports présentent en coupe transversale la forme générale d'un « I » dont la paroi horizontale inférieure forme surface d'appui inférieur du support.

D'autres caractéristiques, buts et avantages de l'invention apparaîtront à la lecture de la description détaillée qui va suivre, faite en rapport aux figures annexées sur lesquelles :
- la figure 1 représente une coupe transversale d'un support de pistes de contact selon l'invention ;
- la figure 2 représente une coupe transversale du même support, sur lequel sont placées des pistes et parcouru par des lignes d'alimentation, au niveau d'un boîtier de jonction selon l'invention ;
- la figure 3 représente une coupe longitudinale verticale d'un boîtier de jonction entre deux supports conformes à l'invention ;
- la figure 4 représente une coupe horizontale du même boîtier.
- la figure 5 représente une coupe verticale d'un ensemble de commutation selon l'invention.

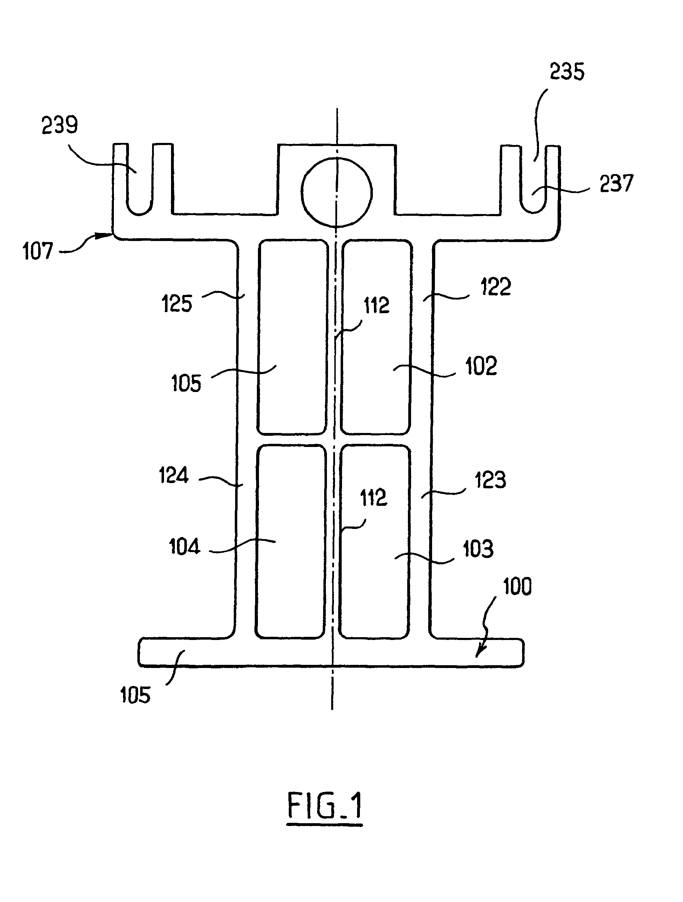

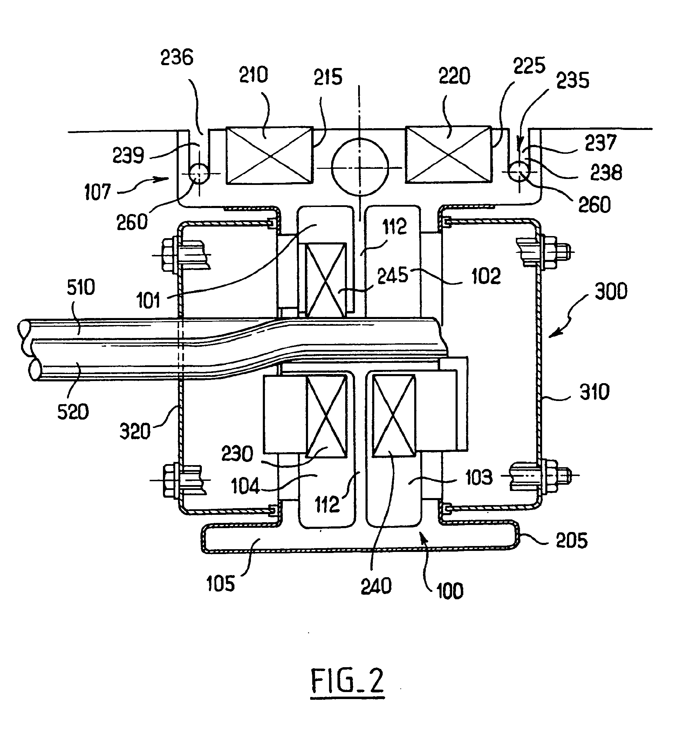

On a représenté sur les figures 1 et 2 un élément-support 100 ayant une longueur de quelques mètres et recevant sur sa surface supérieure une paire de pistes conductrices 210 et 220 partiellement découvertes, de même longueur que cet élément-support. Cet élément-support 100 forme un corps principal destiné à être enterré à une profondeur telle que seule sa surface supérieure émerge à la surface du sol.

Ce support 100 présente en coupe transversale la forme générale d'un «I», c'est-à-dire la forme d'un profilé, dont le plan horizontal supérieur forme deux gorges longitudinales 215 et 225 de même sections transversales que les pistes conductrices 210 et 220 reçues dans ces gorges. Ces pièces conductrices 210 et 220 sont ici des barres métalliques de section rectangulaire.

Les gorges longitudinales supérieures 215 et 225 recevant les barres métalliques de frottement 210 et 220 formant les pistes ont, en coupe transversale, un contour intérieur rectangulaire légèrement allongé horizontalement complémentaire des barres 210 et 220.

Le plan horizontal inférieur de ce support 100 est posé sur une assise non représentée qui est préférentiellement une assise en béton, mais qui peut également être constituée par un plan de terre compacte.

Avantageusement, les parois latérales de l'âme de ce support reçoivent contre elles un remblai ou de la terre.

Une telle géométrie de support de pistes présente donc une surface d'appui inférieure et une surface supérieure de maintien des pistes qui sont toutes deux de grandes dimensions par rapport au volume total du support.

Les inventeurs ont pu constater qu'un tel support 100 est particulièrement stable du fait qu'il reste fermement maintenu contre le plan d'appui inférieur par sa surface inférieure, et présente par son âme une surface de maintien latéral particulièrement apte à s'opposer à tout basculement du support autour de son axe longitudinal.

La stabilité surprenante d'une telle géométrie de support est suffisante pour autoriser une mise en oeuvre de ce support par simple enfouissage ou encore par simple boulonnage au sol. De tels supports en forme générale d'un «I» peuvent donc être mis en place sans fixation lourde.

Comme on peut le voir sur les figures 1 et 2, l'âme du support 100 forme quatre passages longitudinaux, qu'elle entoure sur l'ensemble de leur contour.

Les quatre passages sont en coupe transversale de forme rectangulaire allongée en hauteur et sont disposés en deux paires à deux hauteurs différentes.

Les deux passages inférieurs 103 et 104 reçoivent chacun un élément conducteur 230, 240, constitué par une barre métallique à section rectangulaire.

La barre métallique 230 constitue une ligne d'alimentation alimentée en permanence à une tension de 750 volts, et la barre métallique 240 constitue une ligne de retour de courant reliée en permanence au neutre d'une source non représentée.

L'ensemble formé du support 100 et du jeu de quatre barres conductrices 210, 220, 230 et 240 forme un même segment composite et ces cinq éléments s'étendent tous trois sensiblement sur la même longueur et sont maintenus solidaires par le support 100.

Plus précisément, les segments de piste 210 et 220 sont d'une longueur légèrement inférieure à la longueur d'un segment de support 100. Ces segments de piste 210 et 220 occupent les gorges supérieures 215 et 225 sur environ les trois quarts de la longueur des gorges, en partie centrale des supports. Les parties restantes, d'extrémité des gorges supérieures 215 et 225 sont occupées par des barreaux de matière isolante de mêmes dimensions transversales que les segments de piste 210 et 220. Ces barreaux isolants constituent donc des séparations électriques entre les segments de piste adjacents.

Dans le mode de réalisation présenté ici, le segment support présente une longueur de 11m, les segments de piste une longueur de 8 m. Il reste donc une longueur de gorge 215, 225 de 1,5 m à chaque extrémité d'un segment de piste 210, 220, qui est comblée à chaque fois par un segment de barreau isolant.

Le support 100 est réalisé en matière isolante, ici en matière plastique, de sorte qu'outre ses fonctions de maintien des pistes 210 et 220 en position d'affleurement par rapport à la route et de maintien des lignes d'alimentation et de retour 230 et 240 en position choisie par rapport aux pistes, ce support réalise une isolation électrique de ces différents éléments entre eux et de ces différents éléments par rapport au sol.

On obtient donc un segment d'ensemble qui permet une mise en place aisée et parfaitement positionnée des différents conducteurs sur le trajet d'un véhicule électrique.

La surface supérieure du support 100 forme également une gorge 235 qui décrit une boucle longeant les bords de cette surface supérieure. Plus précisément, cette gorge 235 est formée de deux gorges 237 et 239 rectilignes longeant les bords longitudinaux de la surface supérieure du support, ces gorges longitudinales étant reliées entre elles à leurs extrémités par des réservations transversales 236 et 238 s'étendant le long des bords d'extrémité du support.

Un câble 260 décrit l'ensemble de la gorge 235 en boucle de sorte qu'il entoure la surface supérieure du segment de support 100. Les segments de piste 210 et 220 étant de longueur légèrement inférieure à la longueur de l'élément-support 100, les segments de pistes successifs ne sont pas en contact direct et laissent entre eux un passage transversal dans lequel la gorge 235 s'étend. Le câble 260 entoure donc le couple de pistes supérieures du support 100.

Le câble 260 est relié par ses extrémités à un dispositif apte à détecter une légère surtension. En effet, on prévoit dans une variante de l'invention que le véhicule à alimenter soit muni de moyens d'émission d'un champ magnétique vers le sol, de sorte que ce champ fasse naître un courant induit dans la boucle formée par le câble 260 et déclenche les moyens de détection qui à leur tour commandent un commutateur apte à mettre les pistes 210 et 220 en contact avec la barre conductrice 230 à 750 volts. Les segments de piste 210 et 220 sont au contraire reliés à la ligne neutre 240 en l'absence d'un véhicule.

Selon un mode de réalisation de l'invention, le segment composite décrit ici est également couplé à un dispositif d'émission d'un signal magnétique ou électromagnétique.

Dans ce mode de réalisation, la boucle 260 est préférentiellement une boucle à deux fils parallèles isolés entre eux, l'un étant dédié à la détection du véhicule et l'autre à l'émission depuis le dispositif au sol vers le véhicule.

Parmi les deux passages longitudinaux supérieurs de l'âme du support 100, un passage 102 est parcouru par des lignes électriques à 220 volts référencés 245, qui servent à alimenter différents modules de détection et de commutation répartis le long de la ligne d'alimentation. Ces modules de détection et de commutation peuvent être répartis à raison d'un module par groupe de segments tels que ceux qui viennent d'être décrits, ou à raison d'un module par segment.

Outre les passages et cavités du support décrits précédemment, le support 100 présente un passage longitudinal à section transversale circulaire dans sa partie supérieure, adapté au passage de différents fils conducteurs.

Selon une variante, ce passage central peut être remplacé par une troisième gorge longitudinale supérieure recevant un troisième segment de piste de contact.

On décrira maintenant les aménagements de l'invention permettant de relier différents segments composites entre eux.

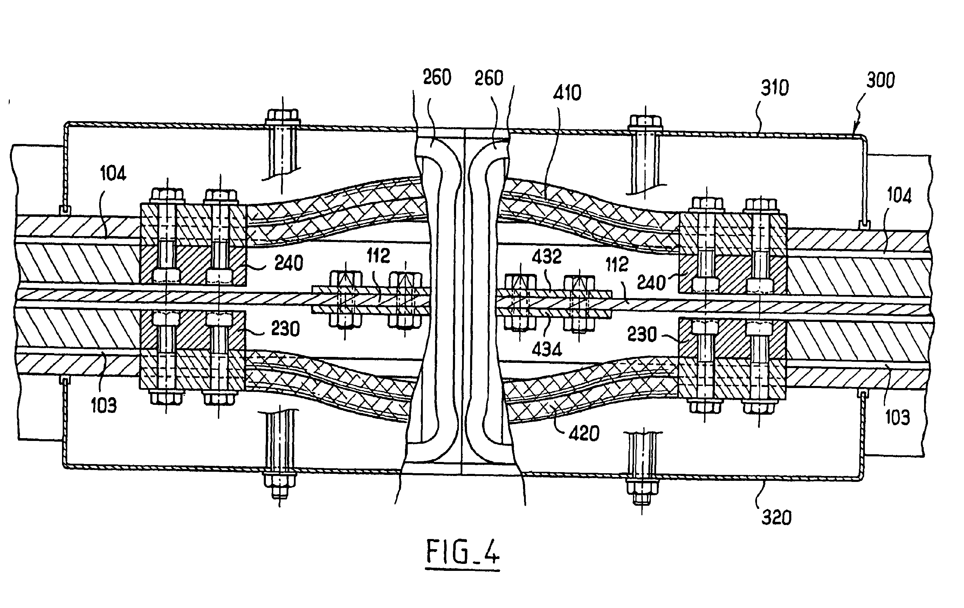

On a ainsi représenté sur les figures 2, 3 et 4 un boîtier de jonction 300 entre deux segments composites. Ce boîtier 300 comprend deux coques 310 et 320 de forme parallélépipédique appuyées chacune par son bord libre rectangulaire sur un côté de l'âme des segments-supports 100. Chaque coque 310 et 320 s'étend longitudinalement en recouvrement des deux extrémités adjacentes des deux segments-supports 100, et s'étend en hauteur de manière à couvrir la quasi totalité de la hauteur de l'âme des segments.

Le bord libre de chaque coque 310, 320 porte un joint d'étanchéité de sorte que lorsque la coque est plaquée contre les supports en place, l'intérieur du boîtier forme une enceinte étanche. Pour maintenir les coques 310 et 320 ainsi en appui, deux tiges transversales traversent le boîtier 300 et reçoivent à chacune de leurs extrémités un boulon qui vient en appui contre la face extérieure de la paroi verticale latérale de chaque coque 310 et 320.

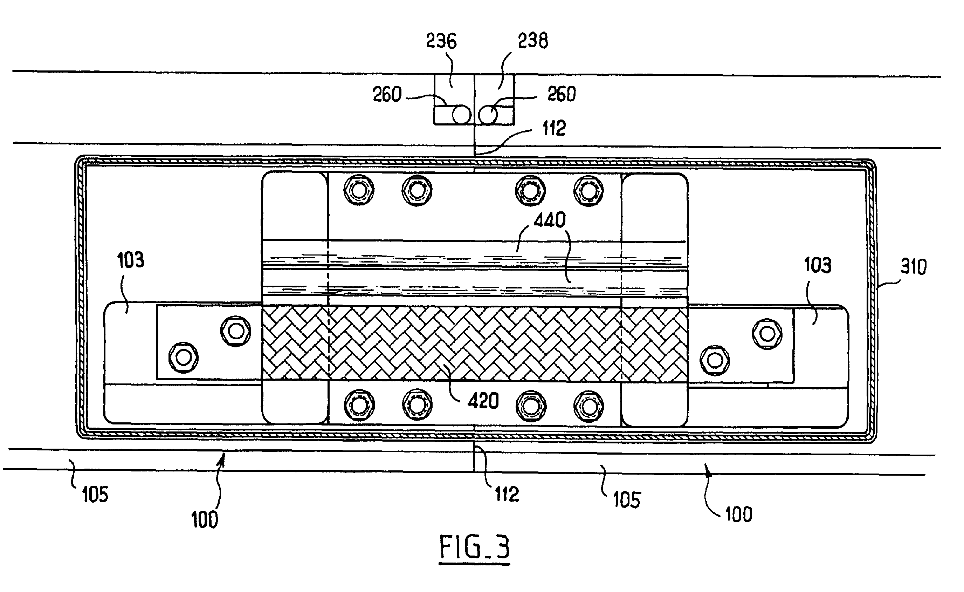

Comme on peut le voir sur la figure 3, la paroi horizontale inférieure 105 d'un des supports 100 vient par son extrémité en contact avec l'extrémité de la paroi correspondante du support 100 consécutif. Il en est de même de la paroi horizontale supérieure 107, qui vient également en appui contre la même paroi du support consécutif. La paroi supérieure 107 présente sa réservation transversale d'extrémité 236 ouverte vers la même ouverture transversale d'extrémité 238 du support consécutif de sorte que ces deux réservations réunies forment un canal transversal dans la surface supérieure des deux supports réunis.

Les deux segments de support viennent également au contact l'un contre l'autre par une paroi verticale centrale 112 de leur âme, cette paroi 112 parcourant l'âme de haut en bas en passant au travers de chacune des paires de passages 102/105 et 103/104.

Le reste du support 100, c'est-à-dire en particulier les parois latérales extérieures de l'âme, référencées 122, 123, 124 et 125, qui bordent extérieurement les passages 102 à 105 de l'âme, ainsi que les barres d'alimentation 230 et 240, s'arrêtent avant l'extrémité des segments-support 100, notamment avant l'extrémité des parois horizontales 105 et 107.

Les barres métalliques 230 et 240 s'arrêtent au sein du boîtier 300, approximativement à mi-chemin entre l'extrémité du boîtier 300 et la jonction physique entre les deux segments-supports 100. Les parois latérales extérieures 122, 123, 124 et 125 de l'âme s'arrêtent, elles, avant l'extrémité des barres de conduction 230 et 240, de sorte que ces barres présentent chacune au niveau de leur extrémité une partie latérale tournée vers l'extérieur de l'âme qui est découverte. Ces parois latérales extérieures s'arrêtent cependant à l'intérieur du boîtier 300, de sorte que les barres 230 et 240 ne présentent de partie découverte qu'à l'intérieur du boîtier 300. Les barres de conduction des deux segments composites s'arrêtent donc à distance l'une de l'autre en formant chacune une zone latérale découverte comprise à l'intérieur du boîtier 300.

Une liaison souple parcourt à chaque fois le boîtier longitudinalement pour relier les extrémités des barres d'alimentation 230, 240 qui se correspondent.

Ainsi, une première tresse métallique 410 est vissée par ses extrémités aux extrémités des barres 230 de 750 volts consécutives, et une seconde tresse métallique 420 est vissée aux extrémités de chacune des barres de neutre 240 des deux segments composites joints.

La souplesse de ces tresses 410 et 420 permet de compenser d'éventuels écarts de géométrie ou de placement des segments ou encore un léger écart de positionnement longitudinal d'une barre d'alimentation 230, 240 sur son support 100.

L'ensemble formé des supports 100, des barres 230 et 240, des pistes 210 et 220 et des tresses 410 et 420 forme donc un ensemble particulièrement aisé à mettre en oeuvre en ce qu'il ne nécessite aucun réglage de positionnement fastidieux.

En effet, il suffit de placer deux segments composites pré-assemblés dans une tranchée l'un contre l'autre, de relier les barres d'alimentation 230, puis 240 des deux segments par les tresses 410 et 420, puis de refermer le boîtier 300 pour que les segments composites soient en état de fonctionnement. Les segments sont en effet de longueur suffisamment faible, et le matériau constitutif du segment-support 100 suffisamment robuste pour autoriser une mise en place sur le site d'un tel segment composite préassemblé sans causer de dommage mécanique à ce segment.

Selon une disposition avantageuse de l'invention, une feuille métallique 205 est disposée autour d'une partie inférieure des segments-supports 100. Une telle feuille enveloppe la face inférieure du support et s'étend de part et d'autre de cette face inférieure contre les côtés de l'âme du « I », sur l'ensemble de la hauteur de l'âme. La feuille s'étend également contre les faces inférieures du plateau supérieur du support, sous le tiret supérieur 107 du « I ».

Dans le présent mode de réalisation, la feuille de métal 205 s'arrête sensiblement à mi-chemin de la longueur transversale de chaque aile de ce plateau supérieur 107.

La feuille 205 s'étend le long des segments-supports, notamment de manière continue autour des jonctions entre les segments-supports 100, de manière à recouvrir la ligne de jonction verticale entre les segments 100.

Dans le cas où une telle jonction est équipée d'un boîtier 300, la feuille 205 est pincée entre chaque côté de l'âme du support 100 et la bordure de chaque coque 310, 320 formant le boîtier 300.

Elle présente également, dans ce cas, des découpes situées à l'intérieur du boîtier 300 adaptées au passage des différents conducteurs.

Le rôle de cette feuille 205 est d'améliorer l'étanchéité du support 100, notamment en recouvrant les jonctions entre les segments 100, et en formant une enveloppe inférieure autour de ces jonctions. Une telle feuille 205 peut être disposée de manière continue le long du support, par exemple par soudage de feuilles successives, ou peut n'être disposée que sur les parties d'extrémité des supports 100, autour des jonctions entre supports.

Une telle enveloppe, dans ce cas préférentiel mais non limitatif décrit ici, réalisée en matériau conducteur, est avantageusement raccordée à la terre pour canaliser d'éventuelles fuites de courant.

Selon une disposition avantageuse, un détecteur de courants de fuite est placé entre l'enveloppe 205 et la terre, apte à alerter d'une fuite de courant éventuelle due par exemple à une rupture d'un segment-support autour d'une barre d'alimentation.

Un tel détecteur formant contrôleur d'isolement est avantageusement placé dans un boîtier tel que le boîtier 600 qui sera décrit par la suite.

On prévoit dans le cadre de l'invention que les parois centrales 112 de chacun des segments-supports 100 soient maintenues en alignement l'une de l'autre par un couple de plaques 432 et 434 les prenant en sandwich en recouvrant leur zone de jonction mutuelle.

Chacune des deux tresses 410 et 420 parcourt le boîtier de part et d'autre de cet assemblage de plaques 112, 432 et 434, de sorte que les deux tresses 410 et 420 sont maintenues à distance l'une de l'autre.

Les supports 100 étant en alignement l'un de l'autre, les passages longitudinaux parcourant ces supports sont également placés en prolongement l'un de l'autre. Certains de ces passages peuvent donc être parcourus par des câblages supplémentaires tels que ceux référencés 440 sur la figure 3. Lorsque de tels câblages sont continus, ils peuvent être facilement coulissés dans l'assemblage, de segment-support en segment-support.

Selon une variante représentée sur la figure 2, le boîtier de jonction 300 peut également être prévu pour recevoir des conducteurs provenant d'un module de commutation, et/ou de détection et/ou d'émission du sol vers le véhicule, disposé latéralement aux segments. Un tel module est par exemple un module apte à détecter un courant induit dans la boucle 260 et à connecter les pistes 210 et 220 à la ligne 230 à 750 volts ou à la ligne 240 selon qu'un véhicule est détecté ou non au-dessus du segment considéré.

Pour cela, on prévoit dans une paroi latérale du boîtier 300 des passages traversants recevant des câbles conducteurs 510, 520 reliant le détecteur/commutateur non représenté à la ligne d'alimentation 230, à la ligne neutre 240 aux pistes 210, 220 et éventuellement à la boucle de détection 260.

Préférentiellement, on alimente un tel commutateur par la ligne 245 à 220 volts à laquelle le commutateur est relié également au niveau de ce boîtier 300. L'ensemble de ces lignes de connexion traverse avantageusement une même paroi latérale du boîtier 300 située du côté où se trouve le commutateur.

Ainsi, lorsqu'il détecte la présence d'un véhicule au dessus d'un des deux segments composites joints par le boîtier 300, le commutateur relie les pistes conductrices 210, 220 de ce segment, isolées des pistes conductrices des segments adjacents, à la liaison à 750 volts qu'il prélève au niveau du boîtier 300. En l'absence de véhicule, il relie au contraire les pistes 210, 220 du segment à la ligne neutre 240.

Comme pour la liaison entre les barres 230, 240 et leurs tresses respectives 410 et 420, on relie avantageusement les lignes provenant du commutateur aux barres 230 et 240 au niveau de l'extrémité découverte de ces barres, par simple vissage.

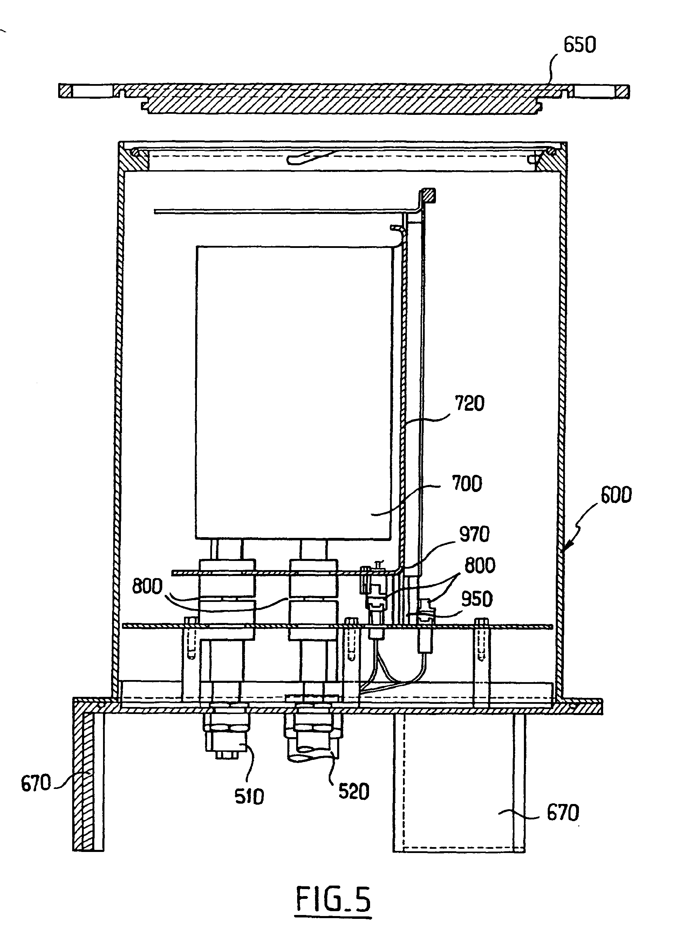

Comme on l'a représenté à la figure 5, le détecteur/commutateur est avantageusement placé dans un boîtier au carter 600 enterré et accessible par une ouverture supérieure 650. Les câblages 510, 520 traversent avantageusement ce boîtier 600 à travers une paroi inférieure. Pour autoriser un tel placement des câblages 510 et 520, on munit le carter 600 de pieds 670 qui séparent sa paroi de fond d'un plan d'appui inférieur sur lequel il est posé.

Avantageusement, les organes électriques 700 du détecteur/commutateur sont rassemblés sur un châssis 720 prévu pour être facilement désolidarisé du carter 600, et les connections entre ces organes 700 fixés sur le châssis 720 et les câblages 510, 520 arrivant dans le carter 600 sont constituées de connecteurs 800 facilement assemblables tels que de simples couples prise mâle/prise femelle enfichables verticalement.

Ainsi, l'ensemble électrique 700 du commutateur est facilement extrait du carter 600 par simple traction verticale, et remis en oeuvre simplement en laissant descendre le châssis 720 portant le montage 700 sur les connecteurs à enfichage 800 du fond du boîtier 600.

Avantageusement, on prévoit des glissières 950 verticales sur les parois intérieures du carter 600 et des rails de glissement 970 sur les côtés du châssis 720 de manière à guider le châssis 720 en enfichage inférieur lors de sa descente dans le carter 600.

Grâce à ces dispositions, il est très simple d'extraire et de replacer les éléments électriques pour réparation, visite ou changement .

Avantageusement, on réalise le carter 600 de détecteur/commutateur selon une forme cylindrique, de sorte que le carter 600 occupe un volume minimal. Le couvercle 650 utilisé est avantageusement un couvercle circulaire fixé par simple rotation.

## Revendications

1. Assemblage d'alimentation par le sol pour véhicule électrique, comprenant une série de segments de piste de contact (210, 220), isolés entre eux et au moins partiellement découverts, une ligne électrique (230) destinée à être alimentée en permanence, des moyens (700) aptes à relier sélectivement les segments de piste (210, 220) à la ligne électrique (230), ainsi que des segments-supports (100) présentant chacun la forme générale d'un profilé comportant, d'un seul tenant , une paroi horizontale supérieure (107) recevant sur sa face supérieure un segment de piste (210, 220), et une âme recevant la ligne d'alimentation (230), **caractérisé en ce que** l'âme forme isolant électrique autour de la ligne d'alimentation et découvre celle-ci au niveau des extrémités des segments-supports (100), et **en ce que** l'assemblage comporte au moins une coque (310, 320) adaptée à venir en appui par ses bords libres contre les côtés des âmes de deux segments-supports (100) consécutifs, recouvrant de manière étanche les parties découvertes de la ligne d'alimentation au niveau des extrémités adjacentes des deux segments-supports.

2. Assemblage selon la revendication 1 **caractérisé en ce que** la ligne d'alimentation (230) forme une série de segments (230) associés chacun à un segment de support (100).

3. Assemblage selon la revendication 2, **caractérisé en ce que** les segments d'alimentation (230) consécutifs sont reliés par des éléments conducteurs souples (410, 420).

4. Assemblage selon l'une quelconque des revendications 2 ou 3, **caractérisé en ce que** les segments d'alimentation (230) sont des conducteurs métalliques, dont le seul isolant autour de leur partie courante est formé à chaque fois par un segment de support (100).

5. Assemblage selon la revendication 4, **caractérisé en ce que** les segments d'alimentation (230) sont des barres métalliques.

6. Assemblage selon l'une quelconque des revendications précédentes, **caractérisé en ce qu'**une paroi d'une coque (300) est traversée par des liaisons électriques (510, 520) reliant la ligne d'alimentation (230) ainsi qu'au moins un segment de piste (210, 220) à un commutateur (700) apte à relier sélectivement ce segment de piste à la ligne d'alimentation.

7. Assemblage selon la revendication 6, **caractérisé en ce que** la paroi de la coque (300) est traversée par des liaisons électriques (510, 520) qui relient chacun des segments de piste (210, 220) consécutifs arrivant au boîtier (300) à un commutateur (700) apte à relier séparément chacun des deux segments de piste (210, 220) à la ligne d'alimentation (230).

8. Assemblage d'alimentation selon l'une quelconque des revendications précédentes, **caractérisé en ce que** la paroi horizontale supérieure (107) des segments de supports (100) présente en face supérieure une gorge (235) parcourant la quasi totalité de la bordure du segment de manière à former sensiblement une boucle entourant l'ensemble de la surface de cette paroi supérieure (107).

9. Assemblage selon la revendication 8, **caractérisé en ce que** la gorge en boucle est parcourue par une conduite électrique (260) comprenant au moins deux conducteurs parallèles isolés entre eux.

10. Assemblage selon l'une des revendications précédentes, **caractérisé en ce qu'**il comprend un commutateur apte à relier sélectivement un segment de piste (210, 220) à la ligne d'alimentation (230) et un carter (600) apte à recevoir le commutateur (700), et **en ce que** le carter (600) et le commutateur (700) sont munis de moyens de connexion électrique complémentaires aptes à être mis en place par enfichage du commutateur dans le carter.

11. Assemblage selon la revendication 10, **caractérisé en ce que** le carter (600) et/ou le commutateur (700) sont/est muni(s) de rails de guidage (950) aptes à guider le commutateur (700) lors d'un enfichage des moyens de connexion (800) entre lui et le carter (600).

12. Assemblage selon l'une quelconque des revendications précédentes, **caractérisé en ce qu'**un segment de piste (210, 220) est de longueur inférieure à celle du segment-support (100) associé à lui, et prolongé à au moins une des ses extrémités par un élément isolant ayant une face alignée avec une face découverte du segment de piste (210, 220).

13. Assemblage selon l'une quelconque des revendications précédentes, **caractérisé en ce qu'**il comporte une feuille (205) formant enveloppe autour d'une jonction entre deux segments de supports (100) successifs.

14. Assemblage selon la revendication 13, **caractérisé en ce que** la feuille (205) est une feuille métallique.

15. Assemblage selon l'une des revendications 13 ou 14, **caractérisé en ce que** la feuille forme en section transversale une enveloppe en U dont le fond reçoit une paroi inférieure (105) des segments-supports(1 00).

16. Assemblage selon la revendication 14, **caractérisé en ce que** la feuille métallique est couplée à un détecteur de courants de fuite.

17. Assemblage selon l'une quelconque des revendications précédentes, **caractérisé en ce que** les segments-supports (100) présentent en coupe transversale la forme générale d'un « I » dont la paroi horizontale inférieure (105) forme surface d'appui inférieur du support (100).

## Claims

1. An assembly for supplying power to an electric vehicle via the ground, comprising a series of contact track segments (210, 220), insulated from each other and at least partly exposed, an electric line (230) intended to be permanently powered, means (700) capable of selectively connecting the track segments (210, 220) to the electric line (230), as well as segment supports (100) each having the general shape of a profile including as a single piece, an upper horizontal wall (107) receiving on its upper face a track segment (210, 220) and a core receiving the power supply line (230), **characterized in that** the core forms an electric insulator around the power supply line and exposes the latter at the ends of the segment supports (100), and **in that** the assembly includes at least one shell (310, 320) adapted so as to press through its free edges against the sides of the cores of two consecutive segment supports (100), sealably covering the exposed portions of the power supply line at the adjacent ends of two segment supports.

2. The assembly according to claim 1, **characterized in that** the power supply line (230) forms a series of segments (230) each associated with a segment support (100).

3. The assembly according to claim 2, **characterized in that** the consecutive power supply segments (230) are connected through flexible conducting components (410, 420).

4. The assembly according to any of claims 2 or 3, **characterized in that** the power supply segments (230) are metal conductors, the single insulator of which around their running portion is every time formed by a segment support (100).

5. The assembly according to claim 4, **characterized in that** the power supply segments (230) are metal bars.

6. The assembly according to any of the preceding claims, **characterized in that** a wall of a shell (300) is crossed by electric connections (510, 520) connecting the power supply line (230) as well as at least one track segment (210, 220) to a switch (700) capable of selectively connecting this track segment to the power supply line.

7. The assembly according to claim 6, **characterized in that** the wall of the shell (300) is crossed by electric connections (510, 520) which each connect consecutive track segments (210, 220) arriving at the casing (300) to a switch (700) capable of separately connecting each of the track segments (210, 220) to the power supply line (230).

8. A power supply assembly according to any of the preceding claims, **characterized in that** the upper horizontal wall (107) of the segment supports (100) has on the upper face a groove (235) covering the quasi-totality of the border of the segment so as to substantially form a loop surrounding the whole of the surface of this upper wall (107).

9. The assembly according to claim 8, **characterized in that** the looped groove is covered by an electric line (260) comprising at least two conductors parallel, isolated from each other.

10. The assembly according to any of the preceding claims, **characterized in that** it comprises a switch capable of selectively connecting a track segment (210, 220) to the power supply line (230) and a case (600) capable of receiving the switch (700), and **in that** the case (600) and the switch (700) are provided with additional electrical connection means capable of being set into place by plugging the switch into the case.

11. The assembly according to claim 10, **characterized in that** the case (600) and/or the switch (700) are provided with guiding rails (950) capable of guiding the switch (700) upon plugging the connection means (800) between it and the case (600).

12. The assembly according to any of the preceding claims, **characterized in that** a track segment (210, 220) is of a shorter length than that of the segment support (100) associated with it, and extended at least at one of its ends with an insulating component having a face aligned with an exposed face of the track segment (210, 220).

13. The assembly according to any of the preceding claims, **characterized in that** it includes a sheet (205) forming a cover around a junction between two successive segment supports (100).

14. The assembly according to claim 13, **characterized in that** the sheet (205) is a metal sheet.

15. The assembly according to any of claims 13 or 14, **characterized in that** the sheet cross-sectionally forms a U-shaped cover, the bottom of which receives a lower wall (105) of the support segments (100).

16. The assembly according to claim 14, **characterized in that** the metal sheet is coupled with a detector of leak currents.

17. The assembly according to any of the preceding claims, **characterized in that** the support segments (100) have in a transverse sectional view, the general shape of an « I », the lower horizontal wall of which (105) forms a lower supporting surface of the support (100).

## Patentansprüche

1. Baugruppe zur Versorgung von Elektrofahrzeugen über den Boden, folgendes umfassend: eine Reihe von Kontaktspursegmenten (210, 220), die voneinander isoliert und wenigstens teilweise freiliegend sind, eine elektrische Leitung (230), die dafür vorgesehen ist, ständig gespeist zu werden, Mittel (700), die dafür eingerichtet sind, die Spursegmente (210, 220) selektiv mit der elektrischen Leitung (230) zu verbinden, sowie Trägersegmente (100), von denen jedes die allgemeine Form eines Profilteils hat, das in einem Stück eine obere horizontale Wand (107), die auf ihrer Oberseite ein Spursegment (210, 220) aufnimmt, und einen Kern, der die Versorgungsleitung (230) aufnimmt, umfasst, **dadurch gekennzeichnet, dass** der Kern um die Versorgungsleitung herum einen elektrischen Isolator bildet und diese im Bereich der Enden der Trägersegmente (100) freilegt, und **dadurch**, dass die Baugruppe wenigstens eine Schale (310, 320) umfasst, die dafür eingerichtet ist, mit ihren freien Rändern auf den Seiten der Kerne zweier aufeinanderfolgender Trägersegmente (100) aufzuliegen, wobei sie die freiliegenden Abschnitte der Versorgungsleitung im Bereich der benachbarten Enden der zwei Trägersegmente abdichtend abdeckt.

2. Baugruppe nach Anspruch 1, **dadurch gekennzeichnet, dass** die Versorgungsleitung (230) eine Reihe von Segmenten (230) bildet, von denen jedes zu einem Trägersegment (100) gehört.

3. Baugruppe nach Anspruch 2, **dadurch gekennzeichnet, dass** aufeinanderfolgende Versorgungssegmente (230) durch biegsame Leiterelemente (410, 420) verbunden sind.

4. Baugruppe nach einem der Ansprüche 2 oder 3, **dadurch gekennzeichnet, dass** die Versorgungssegmente (230) metallische Leiter sind, für die der einzige Isolator um ihren Strom führenden Abschnitt herum jeweils durch ein Trägerelement (100) gebildet wird.

5. Baugruppe nach Anspruch 4, **dadurch gekennzeichnet, dass** die Versorgungssegmente (230) metallische Stäbe sind.

6. Baugruppe nach einem der vorhergehenden Ansprüche, **dadurch gekennzeichnet, dass** eine Wand einer Schale (300) von elektrischen Verbindungen (510, 520) durchstoßen wird, die die Versorgungsleitung (230) sowie wenigstens ein Spursegment (210, 220) mit einem Schalter (700) verbinden, der dafür eingerichtet ist, das Spursegment selektiv mit der Versorgungsleitung zu verbinden.

7. Baugruppe nach Anspruch 6, **dadurch gekennzeichnet, dass** die Wand der Schale (300) von elektrischen Verbindungen (510, 520) durchstoßen wird, die jedes der aufeinanderfolgenden Spursegmente (210, 220), die am Gehäuse (300) ankommen, mit einem Schalter (700) verbinden, der dafür eingerichtet ist, jedes der beiden Spursegmente (210, 220) getrennt mit der Versorgungsleitung (230) zu verbinden.

8. Baugruppe nach einem der vorhergehenden Ansprüche, **dadurch gekennzeichnet, dass** die obere horizontale Wand (107) der Trägersegmente (100) auf der Oberseite eine Rinne (235) hat, die nahezu den gesamten Rand des Segments derart durchzieht, dass sie im Wesentlichen eine Schleife bildet, die die gesamte Fläche dieser oberen Wand (107) umschließt.

9. Baugruppe nach Anspruch 8, **dadurch gekennzeichnet, dass** die schleifenförmige Rinne von einer elektrischen Leitung (260) durchzogen wird, die wenigstens zwei gegeneinander isolierte parallele Leiter umfasst.

10. Baugruppe nach einem der vorhergehenden Ansprüche, **dadurch gekennzeichnet, dass** sie folgendes umfasst: einen Schalter, der dafür eingerichtet ist, ein Spursegment (210, 220) selektiv mit der Versorgungsleitung (230) zu verbinden, und ein Gehäuse (600), das dafür eingerichtet ist, den Schalter (700) aufzunehmen, und **dadurch**, dass das Gehäuse (600) und der Schalter (700) mit komplementären elektrischen Verbindungsmitteln ausgestattet sind, die dafür eingerichtet sind, durch das Einstecken des Schalters in das Gehäuse platziert zu werden.

11. Baugruppe nach Anspruch 10, **dadurch gekennzeichnet, dass** das Gehäuse (600) und/oder der Schalter (700) mit Führungsschienen (950) ausgestattet ist/sind, die dafür eingerichtet sind, den Schalter (700) beim Einstecken der Verbindungsmittel (800) zwischen ihm und dem Gehäuse (600) zu führen.

12. Baugruppe nach einem der vorhergehenden Ansprüche, **dadurch gekennzeichnet, dass** ein Spursegment (210, 220) eine kleinere Länge hat als diejenige des zu ihm gehörenden Trägersegments (100) und an wenigstens einem seiner Enden durch ein isolierendes Element verlängert ist, von dem eine Seite mit einer freiliegenden Seite des Spursegments (210, 220) ausgerichtet ist.

13. Baugruppe nach einem der vorhergehenden Ansprüche, **dadurch gekennzeichnet, dass** sie eine Folie (205) umfasst, die eine Hülle um die Verbindungsstelle zwischen zwei aufeinanderfolgenden Trägersegmenten (100) bildet.

14. Baugruppe nach Anspruch 13, **dadurch gekennzeichnet, dass** die Folie (205) eine Metallfolie ist.

15. Baugruppe nach einem der Ansprüche 13 oder 14, **dadurch gekennzeichnet, dass** die Folie im Querschnitt eine U-förmige Hülle bildet, deren Boden eine untere Wand (105) der Trägersegmente (100) aufnimmt.

16. Baugruppe nach Anspruch 14, **dadurch gekennzeichnet, dass** die Metallfolie an einen Leckstromdetektor angeschlossen ist.

17. Baugruppe nach einem der vorhergehenden Ansprüche, **dadurch gekennzeichnet, dass** die Trägersegmente (100) im Querschnitt die allgemeine Form eines "I" haben, dessen untere horizontale Wand (105) die untere Auflagefläche des Trägers (100) bildet.
